# EUROPÄISCHE PATENTSCHRIFT

(11) **EP 3 738 787 B1**
(45) Veröffentlichungstag und Bekanntmachung des Hinweises auf die Patenterteilung: **07.07.2021**
(21) Anmeldenummer: 19174108.1
(22) Anmeldetag: 13.05.2019
(51) Int. Cl.: B44C 5/04

(54) **VERFAHREN ZUR HERSTELLUNG EINER MIT EINEM DEKOR VERSEHENEN HOLZWERKSTOFFPLATTE**
METHOD FOR THE MANUFACTURE OF A WOODEN BOARD PROVIDED WITH A DECORATIVE LAYER
PROCÉDÉ DE FABRICATION D'UNE PLAQUE EN MATÉRIAU DÉRIVÉ DU BOIS POURVUE D'UN DÉCOR

(43) Veröffentlichungstag der Anmeldung: 18.11.2020
(60) Teilanmeldung: 21175732.3
(73) Patentinhaber: Flooring Technologies Ltd., Kalkara SCM1001 (MT)
(72) Erfinder: Kalwa, Norbert, 32805 Horn-Bad Meinberg (DE)
(74) Vertreter: Maikowski & Ninnemann Patentanwälte Partnerschaft mbB

(56) Entgegenhaltungen:
- WO-A1-2013/032387
- WO-A1-2015/197171
- WO-A1-2017/009011
- WO-A1-2017/111689
- US-A1- 2013 273 244

## Beschreibung

Die vorliegende Erfindung betrifft ein Verfahren zur Herstellung einer mit einem Dekor versehenen Holzwerkstoffplatte, insbesondere mit einer zum Dekor synchronen Struktur versehenen Holzwerkstoffplatte.

### Beschreibung

Die Verwendung von Holzwerkstoffplatten in der Möbelindustrie, als Fußbodenbeläge oder auch zum Verkleiden von Wänden und Decken erfordert eine Bearbeitung bzw. Veredelung der Oberfläche der Holzwerkstoffplatten. Üblicherweise werden im Falle der genannten Anwendungsgebiete die Holzwerkstoffplatten mit einem imprägnierten Dekorpapier beschichtet. Der Vielfältigkeit an verschieden gemusterten Dekorpapieren sind keine Grenzen gesetzt, so dass Holzwerkstoffplatten mit einer Vielzahl von unterschiedlichen Dekoren wie z.B. Stein- oder Holzdekoren erhältlich sind. Zur Erhöhung der Verschleißfestigkeit werden auf das Dekorpapier Overlays aufgebracht. Als Overlay werden dünne Papiere verwendet, welche typischerweise bereits mit einem Melaminharz getränkt wurden Es sind ebenfalls Overlays erhältlich, in denen bereits abriebfeste Partikel, wie zum Beispiel Korundpartikel in das Harz des Overlays eingemischt sind, um die Abriebfestigkeit des Laminats bzw. der Holzwerkstoffplatte zu erhöhen.

Als Alternative zur Verwendung von Dekorpapieren auf Holzwerkstoffplatten hat sich in der Vergangenheit das direkte Bedrucken von Holzwerkstoffplatten entwickelt, da ein Bedrucken von Papier und dessen nachträglichem Kaschieren oder Direktbeschichten auf die Holzwerkstoffplatte entfällt.

Auf das im Direktdruck aufgebrachte Dekor werden anschließend mehrere flüssige wärmehärtbare Harzschichten aufgetragen, die zur Erhöhung der Verschleißfestigkeit abriebfeste Partikel enthalten können. Eine solche wärmehärtbare Harzschicht wird auch als Flüssigoverlay bezeichnet. Das wärmehärtbare Harz ist bevorzugt ein formaldehydhaltiges Harz, insbesondere ein Melamin-Formaldehyd-Harz und Melamin-Harnstoff-Formaldehyd-Harz. Ein Verfahren zur Herstellung der beschriebenen Flüssigoverlay-Schicht ist unter anderem in der EP 233 86 93 A1 beschrieben. Hierbei erfolgt zunächst nach Reinigung der Oberfläche einer Holzwerkstoffplatte das Aufbringen einer ersten oberen Korundpartikel enthaltende Harzschicht auf die Holzwerkstoffplatte, ein Trocknen dieser ersten Harzschicht z.B. bis auf eine Restfeuchte von 3 bis 6 %, anschließendes Aufbringen einer zweiten Zellulosefasern enthaltenen Harzschicht auf die Holzwerkstoffplatte, wiederholtes Trocknen bzw. Antrocknen der zweiten Harzschicht z.B. bis auf eine Restfeuchte von 3 bis 6 %,, Aufbringen einer mindestens dritten Glaspartikel enthaltenden Harzschicht auf die Holzwerkstoffplatte mit anschließendem Antrocknen der dritten Harzschicht, z.B. ebenfalls auf eine Restfeuchte von 3 bis 6 % und ein finales Verpressen des Schichtaufbaus unter Druck-und Temperatureinfluss. Durch die Verwendung eines Flüssigoverlays kann auf das sonst typischerweise vorgesehene Overlaypapier verzichtet werden. Das Flüssigoverlay kann sowohl auf die Oberseite als auch die Unterseite der Holzwerkstoffplatte aufgetragen werden.

Nachteilig bei der Verwendung eines Flüssigoverlays sind der apparative Aufwand und der damit verbundene Platzbedarf. Insbesondere die Trocknungsschritte nach jedem Harzauftrag erfordern die Verwendung von Konvektionstrocknern und der dazu erforderlichen Abluftbehandlung.

Der vorliegenden Erfindung liegt daher die technische Aufgabe zu Grunde, ein Verfahren zur Verfügung zu stellen, welches die Herstellung von Holzwerkstoffplatten in platzsparender und kostengünstiger Weise ermöglicht. Gleichzeitig sollen hohe Abriebwerte, insbesondere der Abriebklassen AC4 bis AC6 bei gleichzeitig geringem Pressblechverschleiß erreicht werden.

Die gestellte Aufgabe wird erfindungsgemäß durch ein Verfahren mit den Merkmalen des Anspruchs 1 gelöst.

Entsprechend wird ein Verfahren zur Herstellung einer mit einem Dekor versehenen Holzwerkstoffplatte bereitgestellt, wobei das Verfahren die folgenden Schritte umfasst:
a) Aufbringen von mindestens einer ersten Schicht aus mindestens einem pulverförmigen Harz auf mindestens eine Seite einer Holzwerkstoffplatte und Anschmelzen der mindestens einen aufgebrachten Schicht aus einem pulverförmigen Harz;
   a1) Aufbringen von mindestens einer Grundierung auf die angeschmolzene Harzpulverschicht;
   a2) Aufbringen von mindestens einer Primerschicht auf die mindestens eine Grundierung;
b) Aufbringen von mindestens einer Dekorschicht mittels eines Direktdruckverfahrens; und
c) Aufbringen von mindestens einer weiteren (zweiten) Schicht aus mindestens einem pulverförmigen Harz auf die mindestens eine aufgedruckte Dekorschicht und Anschmelzen der mindestens einen auf die Dekorschicht aufgestreuten Schicht aus pulverförmigen Harz.

Es wird somit ein Verfahren zur Herstellung von Holzwerkstoffplatten bereitgestellt, in welchem auf die Verwendung von flüssigem Harz für den Schichtaufbau verzichtet wird und stattdessen Harzpulver zum Einsatz kommt.

Durch den Austausch von Harzpulver gegen Flüssigharz entfällt die für Flüssigoverlays notwendige aufwändige Trocknung, wodurch sich die Anlagenkosten, Abluftproblematik und der Platzbedarf reduzieren. Insgesamt ermöglicht das vorliegende Verfahren eine flexiblere Technologie.

WO 2013/032387 A1 beschreibt Verfahren zur Herstellung von beschichteten, mit einem Dekor versehenen Holzwerkstoffplatten, wobei in einer Ausführungsform eine pulverförmige Schicht umfassend Holzfasern und ein Harz auf eine Holzwerkstoffplatte aufgebracht werden, anschließend ein Papier auf diese Schicht aufgetragen wird, welches bedruckt und mit einer einer pulverförmigen Overlayschicht umfassend Fasern, Harz und abriebfeste Partikel versehen und abschließend verpresst wird. US 2013/0273244 A1 beschreibt ebenfalls ein Verfahren zur Herstellung eines Holzwerkstoffpaneels, wobei eine Mischung aus Holzpartikeln, einem Lösungsmittel, einem Bindemittel und Additiven nach einem Trocknungsschritt als Pulver auf ein Holzwerkstoffsubstrat aufgetragen wird. In beiden Fällen wird jedoch weder eine Grundierungsschicht noch eine Primerschicht auf eine Harzpulverschicht vor einem Direktdruck aufgebracht.

In einer Ausführungsform des vorliegenden Verfahrens wird das pulverförmige Harz in einer Menge von 10 bis 50 g/m², bevorzugt 15 bis 30 g/m², insbesondere bevorzugt 20 bis 25 g/m² auf die Holzwerkstoffplatte aufgetragen wird. Diese Auftragsmenge an Harzpulver gilt im Wesentlichen für alle aufzutragenden Harzpulverschichten, wobei diese jeweils angepasst werden können. Die Streudichte ist dabei so gewählt, dass in jedem Fall deckende Schichten erzeugt werden.

Die Teilchengröße des pulverförmigen Harzes liegt zwischen 20 bis 100 µm, bevorzugt zwischen 40 und 89 µm.

In einer weiteren Ausführungsform des vorliegenden Verfahrens ist das aufzutragende pulverförmige Harz ein Formaldehydharz, bevorzugt ein Harnstoffharz, ein Melaminharz oder ein Phenolharz, insbesondere bevorzugt ein Melamin-Formaldehyd-Harz. Es ist bevorzugt, wenn für die erste Harzschicht ein Melaminharz oder eine Harnstoffharz verwendet wird. In den oberen Schichten wird bevorzugt nur Melaminharz eingesetzt.

"Anschmelzen" oder "Angelieren" im Sinne der vorliegenden Anmeldung bedeutet, dass die Harzschicht noch nicht vollständig polymerisiert ist, sondern vielmehr wird die Polymerisation auf einer Zwischenstufe gestoppt, in welcher eine weitergehende Vernetzung bzw. Polymerisation zu einem späteren Verarbeitungszeitpunkt noch möglich ist. Der Sinn eines "Angelierens" liegt somit üblicherweise darin begründet, dass man zu einem späteren Zeitpunkt weitere Funktionsschichten auf die bereits aufgetragene Schutzschicht aufbringen oder das Produkt erst in weiteren Verarbeitungsschritten fertigstellen möchte.

Dem Melaminharz-Pulver können auch weitere Substanzen zugegeben werden. Besonders vorteilhaft ist dabei, dass auch wegen z. B. Aussalz-, Andick-, Absetz-, aushärtungsbeeinflussende Effekten usw. schlecht mit flüssigem Melaminharz verträgliche Substanzen verwendet werden können. Dabei kann es sich um Salze zur Erhöhung der Leitfähigkeit, organische oder anorganische Flammschutzmittel, Cellulosederivate, Radikalfänger, Pigmente, UV-Absorber usw.

Entsprechend kann das verwendete pulverförmige Harz Zuschlagstoffe, wie Pigmente, leitfähige Substanzen und Zellulose enthalten.

Bei Zugabe von Farbpigmenten kann die Schicht aus dem angeschmolzenen Harzpulver gleichzeitig als weiße Grundierungsschicht für die anschließend aufzudruckende Dekorschicht dienen. Als Farbpigmente können weiße Pigmente wie Titandioxid TiO₂ verwendet werden. Weitere Farbpigmente können Calciumcarbonat, Bariumsulfat oder Bariumcarbonat sein. Der Anteil der Farbpigmente kann bis zu 50 Gew% an der Gesamtpulvermenge betragen.

Die Zugabe von Farbpigmenten zu der ersten Schicht aus Harzpulver erhöht die Deckkraft, so dass diese als (alleinige) Grundlage bzw. Grundierung für die anschließende Dekorschicht einsetzbar sein kann.

Die Menge an Zellulosefasern, die mit dem Harzpulver aufgetragen wird, kann zwischen 0,1 und 1 Gew%, bevorzugt zwischen 0,5 und 0,8 Gew% (bezogen auf die aufzutragende Harzmenge) bzw. zwischen 0,1-0,5 g/m², bevorzugt 0,2-0,4 g/m², insbesondere bevorzugt 0,25 g/m² liegen. Die bevorzugt verwendeten Zellulosefasern sind farblos und liegen in Form eines feinen oder granularen, leicht hygroskopischen Pulvers vor.

Die leitfähigen Substanzen können ausgewählt sein aus der Gruppe enthaltend Russ, Kohlefasern, Metallpulver und Nanopartikel, insbesondere Kohlenstoffnanoröhren. Es können auch Kombinationen dieser Substanzen zum Einsatz kommen.

Die verwendeten Harze enthalten bevorzugt jeweils Additive, wie Härter, Netzmittel (Tenside oder Mischungen davon), Trennmittel und/oder weitere Komponenten.

In einer bevorzugten Ausführungsform wird das Harzpulver mittels elektrostatischer Aufladung aufgetragen. Der Auftrag kann auch mittels Pulverbeschichtung nach dem Triboverfahren erfolgen. Hierbei erfolgt eine Reibungsaufladung des aufzutragenden Pulvers.

Das Anschmelzen der aufgebrachten Schicht aus pulverförmige Harz kann unter Verwendung eines IR-Strahlers, oder auch Mikrowellensysteme oder ähnliches erfolgen. Die Verwendung von IR-Strahlern ist besonders bevorzugt.

In einer Ausführungsvariante kann die Oberfläche der Holzwerkstoffplatte vor dem Bedrucken zur Verbesserung der Haftung der nachfolgenden Schichten vorbehandelt werden. Dies kann eine Reinigung mit Bürsten, ein Anschliff, der die Oberfläche auch von Unebenheiten befreit, und/oder eine Plasma- oder Coronabehandlung sein.

Erfindungsgemäß wird in einem nächsten Schritt mindestens eine Grundierung auf die (erste) angeschmolzene Harzpulverschicht zur Erhöhung der Deckkraft aufgetragen.

Die Grundierung umfasst bevorzugt Kasein, Maisstärke oder Sojaprotein und kann anorganische Farbpigmente enthalten und somit als Grundierungsschicht für die anschließend aufzudruckende Dekorschicht dienen.

Als Farbpigmente können wiederum weiße Pigmente wie Titandioxid TiO₂ verwendet werden. Weitere Farbpigmente können Calciumcarbonat, Bariumsulfat oder Bariumcarbonat, aber auch Eisenoxidpigmente (für eine bräunliche Grundierung) sein. Die Grundierung kann neben den Farbpigmenten und dem Kasein, der Maisstärke oder Sojaprotein noch Wasser als Lösemittel enthalten.

Die Menge der aufgetragenen flüssigen Grundierung kann zwischen 10 und 50 g/m², bevorzugt zwischen 15 und 30 g/m², insbesondere bevorzugt zwischen 20 und 25 g/m² liegen.

Es ist ebenfalls denkbar, dass die Grundierung aus mindestens einer, bevorzugt aus mindestens zwei oder mehreren nacheinander aufgetragenen Lagen bzw. Aufträgen besteht (z.B. bis zu fünf Aufträgen), wobei die Auftragsmenge zwischen den Lagen bzw. Aufträgen gleich oder verschieden ist, d.h. die Auftragsmenge einer jeden einzelnen Lagen kann variieren.

Die Grundierung kann unter Verwendung einer Walze auf die Holzwerkstoffträgerplatte mit anschließender Trocknung aufgebracht werden. Es ist auch möglich, die Grundierung mittels Digitaldruck auf die Kunststoffträgerplatte aufzubringen. Die für das digitale Drucken der Grundierung verwendeten Digitaldrucktinten basieren bevorzugt auf UV-Tinten, die mit weißen Farbpigmenten angereichert sind. Es ist aber auch möglich wasserbasierte Digitaldrucktinten oder so genannte Hybridtinten zu verwenden. Ein Auftrag mittels Digitaldruck ist vorteilhaft, da die Druckanlage deutlich kürzer ist als eine Walzvorrichtung und somit Platz, Energie und Kosten spart.

Erfindungsgemäß wird in dem vorliegenden Verfahrenauf die Grundierung eine Primerschicht, bevorzugt als Einmalauftrag mit anschließender Trocknung, aufgebracht. Die Primerschicht ist insbesondere im Falle eines anschließenden Tiefdruckverfahrens (mit Walzen) sinnvoll, wohingegen diese bei Anwendung eines Digitaldruckverfahrens nicht zwingend erforderlich ist.

Die Menge des aufgetragenen flüssigen Primers liegt zwischen 10 und 30 g/m², bevorzugt zwischen 15 und 20 g/m². Als Primer werden bevorzugt Verbindungen auf Polyurethanbasis verwendet.

Als Direktdruckverfahren zum Bedrucken der Holzwerkstoffplatte werden vorteilhafterweise Tiefdruck- und Digitaldruckverfahren angewendet. Das Tiefdruckverfahren ist eine Drucktechnik, bei der die abzubildenden Elemente als Vertiefungen in einer Druckform vorliegen, die vor dem Druck eingefärbt wird. Die Druckfarbe befindet sich vornehmlich in den Vertiefungen und wird aufgrund von Anpressdruck der Druckform und von Adhäsionskräften auf den zu bedruckenden Gegenstand, wie zum Beispiel ein Trägermaterial, übertragen. Bei der Verwendung des indirekten Tiefdrucks werden mehrere Druckwalzen eingesetzt.

In einer besonders bevorzugten Ausführungsform wird das mindestens eine Dekor mittels Digitaldruckverfahren auf die (oberflächenbehandelte und vorbeschichtete) Trägerplatte aufgebracht. Beim Digitaldruck wird das Druckbild direkt von einem Computer in eine Druckmaschine, wie zum Beispiel einen Laserdrucker oder Tintenstrahldrucker, übertragen.

Dabei entfällt die Verwendung einer statischen Druckform. Der Dekordruck erfolgt nach dem Inkjet-Prinzip im Single-Pass bei dem die gesamte Breite der zu bedruckenden Oberseite überspannt wird, wobei die Platten unter dem Drucker hindurch bewegt werden. Es ist aber auch möglich, dass die zu bedruckende Trägerplatte unter dem Drucker angehalten wird und dieser die Oberfläche beim Drucken mindestens einmal überfährt.

Die Druckfarben sind in separaten Druckkopfreihen zusammen gefasst, wobei je Farbe eine oder zwei Reihen Druckköpfe vorgesehen sein können. Die Farben der Digitaldrucktinten sind beispielsweise schwarz, blau, rot, rötliches gelb, grünliches gelb, optional kann auch CMYK verwendet werden. Die Digitaldrucktinten basieren optional auf den gleichen Pigmenten, die für analogen und/oder digitalen Druck mit wasserbasierten Tinten verwendet werden. Die Digitaldrucktinten basieren bevorzugt auf UV-Tinten. Es ist aber auch möglich wasserbasierte Digitaldrucktinten oder so genannte Hybridtinten zu verwenden. Nach dem Drucken erfolgt eine Trocknung und/oder Bestrahlung des Dekordrucks.

Die Druckfarben werden in einer Menge zwischen 1 und 30 g/m², bevorzugt zwischen 3 und 20 g/m², insbesondere bevorzugt zwischen 3 und 15 g/m² aufgebracht.

Zusammen mit dem Dekor werden ebenfalls die für die Ausrichtung in der Presse erforderlichen Markierungen aufgedruckt.

Die in Schritt c) des vorliegenden Verfahrens aufgetragene und angeschmolzene weitere Pulverharzschicht umfasst bevorzugt Pulver auf Formaldehyd-Harzbasis, besonders bevorzugt Melamin-Formaldehydharz. Die Auftragsmenge an Harzpulver liegt in diesem Schritt zwischen 10 und 50 g/m², bevorzugt zwischen 20 und 40 g/m².

Wie bereits oben ausgeführt können dem Harzpulver auch in diesem Verfahrensschritt Zuschlagstoffe wie leitfähige Substanzen oder Zellulose, und Additive, wie Härter, Netzmittel oder Trennmittel zugegeben werden.

Das Anschmelzen bzw. Angelieren erfolgt auch hier bevorzugt unter Verwendung eines IR-Strahlers.

Es ist möglich, die bedruckte Platte nach diesem Verfahrensschritt einer Zwischenlagerung zuzuführen. Die aufgebrachte und angeschmolzene Harzpulverschicht dient in diesem Falle als Schutzschicht, die einerseits dem Schutz der bedruckten Oberfläche im Falle der Zwischenlagerung dient und andererseits (aufgrund der noch nicht vollständig ausgehärteten Harzschicht) eine weitere Verarbeitung ermöglicht. Insbesondere bei komplexen Verarbeitungsprozessen ist eine Entkopplung bestimmter Arbeitsschritte aus Gründen von Kosten, Technologie usw. nötig. Es können beispielsweise verkettete Produktionslinien bezüglich ihrer Produktivität stark unterschiedlich sein. Dann müssen zwangsläufig Pufferlager aufgebaut werden, in denen Materialien aufeinander gestapelt werden. Weiter können in einer Produktionslinie Mehrfachdurchläufe nötig sein, weil Auftragsmengen usw. nicht in einem Durchlauf realisierbar sind. In all diesen Fällen sind angetrocknete bzw. angehärtete Oberflächen von Vorteil, da diese einerseits einen Schutz der bedruckten Oberfläche im Falle einer Zwischenlagerung und andererseits eine weitere Verarbeitung ermöglichen.

In einer weitergehenden Ausführungsform werden auf die Dekorschicht oder die in Schritt c) aufgebrachte Harzpulverschicht abriebfeste Partikel gleichmäßig aufgestreut (Schritt d).

Als abriebfeste Partikel können Partikel aus Korund (Aluminiumoxide), Borcarbide, Siliziumdioxide, Siliziumcarbide verwendet werden. Besonders bevorzugt sind Korundpartikel. Dabei handelt es sich in bevorzugter Weise um Edelkorund (weiß) mit einer hohen Transparenz, damit die optische Wirkung des darunterliegenden Dekors so wenig wie möglich nachteilig beeinflusst wird. Korund weist eine ungleichmäßige Raumform auf.

Die Menge an aufgestreuten abriebfesten Partikeln beträgt 7 bis 50 g/m², bevorzugt 10 bis 30 g/m², insbesondere bevorzugt 15 bis 25 g/m². Die Menge der aufgestreuten abriebfesten Partikel hängt von der zu erreichenden Abriebklasse und der Korngröße ab. So liegt die Menge an abriebfesten Partikeln im Falle der Abriebklasse AC3 im Bereich zwischen 10 bis 15 g/m², in der Abriebklasse AC4 zwischen 15 bis 20 g/m² und in der Abriebklasse AC5 zwischen 20 bis 35 g/m² bei Verwendung der Körnung F200. Im vorliegenden Fall weisen die fertigen Platten bevorzugt die Abriebklasse AC4 auf.

Es werden abriebfeste Partikel mit Körnungen in den Klassen F180 bis F240, bevorzugt F200 verwendet. Die Korngröße der Klasse F180 umfasst einen Bereich von 53 - 90 µm, F220 von 45-75 µm, F230 34-82 µm, F240 28-70 µm (FEPA Norm). In einer Variante werden als abriebfeste Partikel Edelkorund weiß F180 bis F240, bevorzugt in einem Hauptkornbereich von 53-90 µm verwendet. In einer besonders bevorzugten Ausführungsform werden Korundpartikel der Klassen F180-220 verwendet.

Die abriebfesten Partikel dürfen nicht zu feinkörnig sein (Gefahr der Staubbildung), aber auch nicht zu grobkörnig sein. Die Größe der abriebfesten Partikel stellt somit ein Kompromiss dar.

In einer weitergehenden Ausführungsform können silanisierte Korundpartikel verwendet werden. Typische Silanisierungsmittel sind Aminosilane.

In einer weitergehenden Ausführungsform des vorliegenden Verfahrens wird mindestens eine dritte Schicht aus mindestens einem pulverförmigen Harz (Schritt e), insbesondere auf die Schicht aus abriebfesten Partikeln, aufgebracht. Diese Schicht dient als Trennschicht zur Absperrung der abriebfesten Partikel.

Die in diesen Schritt e) aufgetragene und angeschmolzene Pulverharzschicht umfasst bevorzugt Pulver auf Formaldehyd-Harzbasis, besonders bevorzugt Melamin-Formaldehydharz. Die Auftragsmenge an Harzpulver liegt in diesem Schritt zwischen 10 und 50 g/m², bevorzugt zwischen 20 und 40 g/m².

Wie bereits oben ausgeführt können den Harzpulver auch in diesem Verfahrensschritt Zuschlagstoffe wie leitfähige Substanzen oder Zellulose, und Additive, wie Härter, Netzmittel oder Trennmittel zugegeben werden.

Das Anschmelzen bzw. Angelieren erfolgt auch hier bevorzugt unter Verwendung eines IR-Strahlers.

In einer weitergehenden Ausführungsform des vorliegenden Verfahrens werden, insbesondere auf die mindestens eine dritte angeschmolzene Harzpulverschicht, Glaskugeln aufgestreut (Schritt f). Die Glaskugeln dienen als Abstandshalter zwischen abriebfesten Partikeln und nachfolgenden Pressblech fungieren. Damit kann der Blechverschleiß zumindest teilweise reduziert werden.

Die bevorzugt verwendeten Glaskugeln weisen einen Durchmesser von 60 - 120 µm, bevorzht 80-90 µm auf. Der Durchmesser der Glaskugeln ist auf die durchschnittliche Partikelgröße der verwendeten abriebfesten Partikel abgestimmt, um eine optimale Absperrung zum nachfolgenden Pressblech zu gewährleisten. So werden im Falle von Korund F220 Glaskugeln mit einem Durchmesser zwischen 70-90 µm verwendet, und im Falle von Korund F180 Glaskugeln mit einem Durchmesser zwischen 80-120 µm verwendet.

Die Menge an Glaskugeln beträgt 5 bis 30 g/m², bevorzugt 8 bis 20 g/m², insbesondere bevorzugt 8 bis 15 g/m².

Die Glaskugeln können ebenfalls in silanisierter Form vorliegen. Durch die Silanisierung der Glaskugeln wird die Einbettung der Glasperlen in die Harzmatrix verbessert.

In einer weitergehenden Ausführungsform des vorliegenden Verfahrens wird mindestens eine vierte Schicht aus mindestens einem pulverförmigen Harz (Schritt f), insbesondere auf die Schicht aus Glaskugeln, aufgebracht. Diese Schicht dient zur Absperrung der Glaskugeln und als Abschlussschicht.

Die in diesen Schritt g) aufgetragene und angeschmolzene vierte Pulverharzschicht umfasst bevorzugt Pulver auf Formaldehyd-Harzbasis, besonders bevorzugt Melamin-Formaldehydharz. Die Auftragsmenge an Harzpulver liegt in diesem Schritt zwischen 10 und 50 g/m², bevorzugt zwischen 20 und 40 g/m².

Wie bereits oben ausgeführt können den Harzpulver auch in diesem Verfahrensschritt Zuschlagstoffe wie leitfähige Substanzen oder Zellulose, und Additive, wie Härter, Netzmittel oder Trennmittel zugegeben werden.

Das Anschmelzen bzw. Angelieren erfolgt auch hier bevorzugt unter Verwendung eines IR-Strahlers.

In einer weiteren Ausführungsform des vorliegenden Verfahrens wird der Schichtaufbau in einer Kurztaktpresse (KT-Presse) verpresst.(Schritt h) Der Pressschritt erfolgt unter Druck-und Temperatureinfluss bei Temperaturen zwischen 180 und 250°C, bevorzugt zwischen 200 und 230°C, insbesondere bevorzugt bei 200°C und einem Druck zwischen 30 und 60 kg/cm², insbesondere bevorzugt zwischen 40 und 50 kg/cm². Die Presszeit liegt zwischen 8 und 30 sec, bevorzugt zwischen 10 und 25 sec.

Bevorzugt wird die beschichtete Holzwerkstoffplatte in der Kurztaktpresse zu einem in der Kurztaktpresse befindlichen strukturierten Pressblech anhand von Markierungen auf der Holzwerkstoffplatte ausgerichtet, so dass eine Deckungsgleichheit zwischen dem Dekor auf der Holzwerkstoffplatte und der einzuprägenden Struktur des Pressbleches hergestellt wird. Dies ermöglicht die Herstellung einer dekorsynchronen Struktur. Während des Verpressens kommt es zu einer Aufschmelzung der Melaminharzschichten und Ausbildung eines Laminats durch Kondensationsreaktion unter Einschluss der Bestandteile Korund/Glas/Fasern.

Auf die Unterseite der Holzwerkstoffplatte kann ein Gegenzug, z.B. aus mehreren Harzschichten ohne Zuschlagstoffe oder ein Gegenzugpapier, aufgetragen werden. Hierdurch wird gewährleistet, dass die durch die aufgebrachten Schichten beim Verpressen entstehenden Zugkräfte auf die Holzwerkstoffplatte sich gegenseitig aufheben. Der auf die Unterseite aufgebrachte Gegenzug entspricht im Schichtaufbau und der jeweiligen Schichtdicke ungefähr der auf der Oberseite aufgebrachten Schichtfolge jedoch ohne die Zugabe der Zuschlagstoffe abriebfesten Partikel oder Glaskugeln. Es kann auch ein Imprägnat als Gegenzug verwendet werden.

In einer bevorzugten ersten Ausführungsvariante umfasst das vorliegende Verfahren die folgenden Schritte:
a) Aufbringen von mindestens einer ersten Schicht aus mindestens einem pulverförmigen Harz auf mindestens eine Seite einer Holzwerkstoffplatte und Anschmelzen der mindestens einen aufgebrachten Schicht aus einem pulverförmigen Harz;
a1) Aufbringen von mindestens einer Grundierung auf die erste angeschmolzene Harzpulverschicht;
a2) Aufbringen von mindestens einer Primerschicht auf die mindestens eine Grundierung;
b) Aufbringen von mindestens einer Dekorschicht mittels eines Direktdruckverfahrens;
b1) Aufstreuen von abriebfesten Partikeln;
c) Aufbringen von mindestens einer weiteren Schicht aus mindestens einem pulverförmigen Harz auf die mindestens eine Schicht aus abriebfesten Partikeln und Anschmelzen der aufgebrachten Schicht aus einem pulverförmigen Harz; und
h) Verpressen des Schichtaufbaus.

In einer bevorzugten zweiten Ausführungsvariante umfasst das vorliegende Verfahren die folgenden Schritte:
a) Aufbringen von mindestens einer ersten Schicht aus mindestens einem pulverförmigen Harz auf mindestens eine Seite einer Holzwerkstoffplatte und Anschmelzen der mindestens einen aufgebrachten Schicht aus einem pulverförmigen Harz;
a1) Aufbringen von mindestens einer Grundierung auf die erste angeschmolzene Harzpulverschicht;
a2) Aufbringen von mindestens einer Primerschicht auf die mindestens eine Grundierung;
b) Aufbringen von mindestens einer Dekorschicht mittels eines Direktdruckverfahrens;;
c) Aufbringen von mindestens einer zweiten Schicht aus mindestens einem pulverförmigen Harz auf die mindestens eine aufgedruckte Dekorschicht und Anschmelzen der mindestens einen auf die Dekorschicht aufgebrachten zweiten Schicht aus pulverförmigen Harz;
d) Aufstreuen von abriebfesten Partikeln;
e) Aufbringen von mindestens einer weiteren, dritten Schicht aus mindestens einem pulverförmigen Harz auf die mindestens eine Schicht aus abriebfesten Partikeln und Anschmelzen der aufgebrachten dritten Schicht aus pulverförmigen Harz;
f) Aufstreuen von Glaskugeln auf die mindestens eine dritte angeschmolzene Harzpulverschicht;
g) Aufbringen von mindestens einer weiteren, vierten Schicht aus mindestens einem pulverförmigen Harz auf die Schicht aus Glaskugeln und Anschmelzen der aufgebrachten vierten Schicht aus pulverförmigen Harz; und
h) Verpressen des Schichtaufbaus.

In einer weiteren Ausführungsform ist die mindestens eine Holzwerkstoffplatte eine mitteldichte Faser (MDF)-, hochdichte Faser (HDF)- oder Span- oder Grobspan (OSB)- oder Sperrholzplatte und/oder eine Holz-Kunststoff-Platte.

Das vorliegende Verfahren ermöglicht somit die Herstellung einer verschleißfesten mit einer Dekorschicht versehenen Holzwerkstoffplatte mit einem Harzaufbau mit abriebfesten Partikeln. Die Holzwerkstoffplatte umfasst mindestens eine Dekorschicht auf der Oberseite und einen mehrschichtigen Harzaufbau enthaltend abriebfeste Partikel, optional Zellulosefasern und Glaskugeln, wobei der mehrschichtige Harzaufbau eine Gesamtschichtdicke zwischen 60 und 200 µm, bevorzugt zwischen 90 und 150 µm, insbesondere bevorzugt zwischen 100 und 120 µm aufweist.

In einer Ausführungsform ermöglicht das vorliegende Verfahren die Herstellung einer abriebfesten Holzwerkstoffplatte mit folgendem Schichtaufbau (von unten nach oben gesehen): optional Gegenzug - Holzwerkstoffplatte - erste Harzschicht aus angeschmolzenem Harzpulver - Grundierungsschicht - Primerschicht-Druckdekorschicht - zweite Harzschicht aus angeschmolzenem Harzpulver (Schutzschicht).

In einer weiteren Ausführungsform ermöglicht das vorliegende Verfahren die Herstellung einer abriebfesten Holzwerkstoffplatte mit folgendem Schichtaufbau (von unten nach oben gesehen): optional Gegenzug - Holzwerkstoffplatte - erste Harzschicht aus angeschmolzenem Harzpulver - Grundierungsschicht - Primerschicht - Druckdekorschicht - Schicht aus abriebfesten Partikeln - zweite Harzschicht aus angeschmolzenem Harzpulver (Schutzschicht).

In einer noch weiteren Ausführungsform ermöglicht das vorliegende Verfahren die Herstellung einer abriebfesten Holzwerkstoffplatte mit folgendem Schichtaufbau (von unten nach oben gesehen): optional Gegenzug - Holzwerkstoffplatte - erste Harzschicht aus angeschmolzenem Harzpulver - Grundierungsschicht - Primerschicht - Druckdekorschicht - zweite Harzschicht aus angeschmolzenem Harzpulver (Schutzschicht) - Schicht aus abriebfesten Partikeln- dritte Harzschicht aus angeschmolzenem Harzpulver (Trennschicht) - Glaskugeln (Abstandshalter) - vierte Harzschicht aus angeschmolzenem Harzpulver (Abschlussschicht).

Die Schutzschicht dient der Abdeckung des Dekors und des Schutzes des Dekors während der Zwischenlagerung (Stapelung, Lagerung, Transport). Die weiteren Harzschichten auf der Oberseite bilden in Summe ein Overlay, das das fertige Laminat gegen Abrieb schützt und eine dekorsynchrone Strukturierung ermöglicht.

Die Produktionslinie zur Durchführung des vorliegenden Verfahrens umfasst folgende Elemente:
- mindestens eine Auftragsvorrichtung zum Auftragen einer ersten Harzpulverschicht, die Fasern enthalten kann, auf die Oberseite der Holzwerkstoffplatte und mindestens eine Vorrichtung zum Anschmelzen der ersten Harzpulverschicht, insbesondere ein IR-Strahler;
- mindestens eine Auftragsvorrichtung zum Auftragen von mindestens einer Grundierungsschicht;
- mindestens eine Auftragsvorrichtung zum Auftragen von mindestens einer Primerschicht;
- mindestens eine Druckvorrichtung,
- opt. mindestens eine Auftragsvorrichtung zum Auftragen einer weiteren Harzpulverschicht und mindestens eine Vorrichtung zum Anschmelzen der Harzpulverschicht, insbesondere ein IR-Strahler;,
- opt. mindestens eine Vorrichtung zum Aufstreuen einer vorbestimmten Menge an abriebfesten Partikeln;
- mindestens eine Auftragsvorrichtung zum Auftragen einer weiteren Harzpulverschicht und mindestens eine Vorrichtung zum Anschmelzen der Harzpulverschicht, insbesondere ein IR-Strahler;
- opt. mindestens eine Vorrichtung zum Aufstreuen einer vorbestimmten Menge an Glaskugeln;
- opt mindestens eine Auftragsvorrichtung zum Auftragen einer weiteren Harzpulverschicht und mindestens eine Vorrichtung zum Anschmelzen der ersten Harzpulverschicht, insbesondere ein IR-Strahler; und
- opt. mindestens eine in Verarbeitungsrichtung hinter der letzten Trocknungsvorrichtung angeordnete Kurztaktpresse.

Als in der vorliegenden Produktionslinie vorgesehene Vorrichtungen zum Auftragen der Harzpulverschichten können Tribopistolen verwendet werden.

Die in der vorliegenden Produktionslinie vorgesehenen Streuvorrichtungen für die abriebfesten Partikel und Glaskugeln ist geeignet zum Streuen von Pulver, Granula, Fasern und umfasst ein oszillierendes Bürstensystem. Die Streuvorrichtung besteht im Wesentlichen aus einem Vorratstrichter, einer sich drehenden, strukturierten Walze und einem Abstreifer. Dabei wird über die Drehgeschwindigkeit der Walze die Auftragsmenge an abriebfesten Material bestimmt. Die Streuvorrichtung umfasst bevorzugt eine Stachelwalze.

In einer Ausführungsform der vorliegenden Produktionslinie ist zudem vorgesehen, dass die mindestens eine Streuvorrichtung von mindestens einer Kabine, die mit mindestens einem Mittel zum Entfernen von in der Kabine auftretenden Stäuben versehen ist, umgeben ist bzw. in dieser angeordnet ist. Das Mittel zum Entfernen der Stäube kann in Form einer Absaugvorrichtung oder auch als Vorrichtung zum Einblasen von Luft ausgebildet sein. Das Einblasen von Luft kann über Düsen erreicht werden, die am Plattenein- und auslauf installiert sind und Luft in die Kabine einblasen. Zusätzlich können diese verhindern, dass durch Luftbewegungen ein inhomogener Streuvorhang an abriebfesten Material entsteht.

Die Entfernung des Staubes aus abriebfesten Material aus der Umgebung der Streuvorrichtung ist vorteilhaft, da neben der offensichtlich gesundheitlichen Belastung für die an der Produktionslinie tätigen Arbeiter der Feinstaub aus abriebfesten Partikeln sich auch auf anderen Anlagenteilen der Produktionslinie ablegt und zu erhöhten Verschleiß der selbigen führt. Die Anordnung der Streuvorrichtung in einer Kabine dient daher nicht nur der Reduzierung der gesundheitlichen Staubbelastung der Umgebung der Produktionslinie, sondern beugt auch einem vorzeitigen Verschleiß vor.

Die Streuvorrichtung wird bevorzugter Weise durch eine Lichtschranke gesteuert, wobei die Lichtschranke in Verarbeitungsrichtung vor der unterhalb der Streuvorrichtung vorgesehenen Walze (Streuwalze) angeordnet ist. Die Steuerung der Streuvorrichtung durch eine Lichtschranke ist sinnvoll, das sich zwischen den einzelnen Holzwerkstoffplatten mehr oder weniger große Lücken befinden, Diese startet den Streuprozess sobald sich eine Platte vor der Streuwalze befindet.

In einer Ausführungsform der vorliegenden Streuvorrichtung ist vor der Streuwalze mindestens ein Trichter zum Auffangen von überschüssigen abriebfesten Partikeln (d.h. nicht auf der mindestens einen Holzwerkstoffplatte aufgestreuten, sondern vielmehr vor dem Einfahren der Holzwerkstoffplatte mit Hilfe der Transportvorrichtung unter die Streuwalze vor derselbigen herunterfallende abriebfeste Partikel) vorgesehen.

In einer weitergehenden Variante ist der Trichter mit mindestens einer Fördereinrichtung und einer Siebvorrichtung gekoppelt, wobei das in dem Trichter aufgefangene überschüssige abriebfeste Material über die Fördereinrichtung zu der Siebvorrichtung transportiert wird. Die Siebmaschen der Siebvorrichtung entsprechen dem größten verwendeten Korn des abriebfesten Partikelmaterials (d.h. ca. 80-100 µm). In der Siebvorrichtung werden Schmutzpartikel und verklumptes Material (wie verklumptes Harz oder verklumptes abriebfestes Material) von dem aufgefangenen abriebfesten Material abgetrennt und das gesiebte abriebfeste Material kann in die Streuvorrichtung zurückgeführt (recycelt) werden.

Wie oben bereits erläutert, ist auch vorgesehen, den Härter gezielt an den korrespondierenden Auftragswerken bzw. Auftragsvorrichtungen für die verschiedenen Harzschichten dem flüssigen Harz zuzumischen. In einer Ausführungsform der vorliegenden Produktionslinie ist hierfür mindestens eine Dosieranlage für die Zugabe des Härters an jeder Auftragsvorrichtung vorgesehen. Der Härter wird von der mindestens einen Dosieranlage in den Vorlagenbehälter für das Harz gepumpt und in dem Vorlagenbehälter mit dem Harz z.B. mittels eines geeigneten Rührwerkes vermischt

Die Erfindung wird nachfolgend unter Bezugnahme auf mehrere Ausführungsbeispiele näher erläutert.

### Ausführungsbeispiel 1:

In einer Produktionslinie werden 8 mm HDF vereinzelt, mit Hilfe von Bürsten von Staub befreit und denn über Rollentransporte weitertransportiert.

In einer Auftragsvorrichtung werden sie dann mit Melaminharz-Pulver in einer Menge von 25 g/m² mit Hilfe von Tribopistolen beschichtet. Im Melaminharz-Pulver waren die üblichen Hilfsstoffe wie Härter, Trennmittel usw. enthalten. Danach wird das Pulver durch Infrarotstrahlung angeschmolzen.

Danach wird die grundierte Platte im Mehrfachauftrag mit einer Farbgrundierung mit anschließender Zwischentrocknung(Umluft) beschichtet. Bei der Farbgrundierung handelt es sich um ein Gemisch aus Kasein und Pigment (Titandioxid). Die Auftragsmenge pro Auftrag liegt bei ca. 5 g fl./ m². Der Auftrag wird mindestens fünfmal wiederholt. Danach erfolgt der Auftrag eines Primers (Auftragsmenge: 10 - 20 g fl./m²) mit Umlufttrocknung.

Danach wird die Platte mit Hilfe von Walzen oder einem Digitaldrucker bedruckt. Die Auftragsmengen an Farbe liegen bei 3 bis 15 g fl. / m². Die Farbe wird über IR-Strahlung oder Umluft getrocknet.

Auf den Druck wird mit einer Streuvorrichtung Korund aufgestreut (Auftragsmenge: 20 g Korund/m², F 180).

Danach wird wiederum mit einer Tribopistole Melaminharz-Pulver aufgetragen (Auftragsmenge: 80 g/m²). Dieses Melaminharz-Pulver wird wieder mit Hilfe eines IR-Strahlers angeliert. Im Melaminharzpulver waren die üblichen Hilfsstoffe wie Härter, Trennmittel usw. enthalten.

Danach wird die Platte in einer KT-Presse zusammen mit einem Gegenzugimprägnat verpresst. Die Pressbedingungen waren: T=200°C, p= 40 kg/cm² und t= 25 sec. Die verpresste Platte wurde anschließend visuell begutachtet, wobei sich keine Auffälligkeiten zeigten. Die anschließend durchgeführten Oberflächenprüfungen gemäß der DIN EN 15468 - August 2018 zeigten ebenfalls keine Auffälligkeiten. Es wurden alle Anforderungen der Beanspruchungsklasse 32 erfüllt.

### Ausführungsbeispiel 2:

In einer Produktionslinie werden 8 mm HDF vereinzelt, mit Hilfe von Bürsten von Staub befreit und denn über Rollentransporte weitertransportiert.

In einer Auftragsvorrichtung werden sie dann mit Harnstoffharz-Pulver in einer Menge von 25 g/m² mit Hilfe von Tribopistolen beschichtet. Im Harnstoffharz-Pulver waren die üblichen Hilfsstoffe wie Härter, Trennmittel usw. enthalten. Danach wird das Pulver durch Infrarotstrahlung angeschmolzen.

Danach wird die grundierte Platte im Mehrfachauftrag mit einer Farbgrundierung mit anschließender Zwischentrocknung(Umluft) beschichtet. Bei der Farbgrundierung handelt es sich um ein Gemisch aus Kasein und Pigment (Titandioxid). Die Auftragsmenge pro Auftrag liegt bei ca. 5 g fl./ m². Der Auftrag wird mindestens fünfmal wiederholt. Danach erfolgt der Auftrag eines Primers (Auftragsmenge: 10 - 20 g fl./m²) mit Umlufttrocknung.

Danach wird die Platte mit Hilfe von Walzen im Tiefdruckverfahren oder einem Digitaldrucker bedruckt. Die Auftragsmengen an Farbe liegen bei 3 bis 15 g fl. / m². Die Farbe wird über IR-Strahlung oder Umluft getrocknet.

Auf den Druck wird mit einer Streuvorrichtung Korund aufgestreut (Auftragsmenge: 20 g Korund/m², F 180).

Danach wird wiederum mit einer Tribopistole Melaminharz-Pulver aufgetragen (Auftragsmenge: 80 g/m²). Dieses Melaminharz-Pulver wird wieder mit Hilfe eines IR-Strahlers angeliert. Im Melaminharz-Pulver waren die üblichen Hilfsstoffe wie Härter, Trennmittel usw. enthalten.

Danach wird die Platte in einer KT-Presse zusammen mit einem Gegenzugimprägnat verpresst. Die Pressbedingungen waren: T=200°C, p= 40 kg/cm² und t= 25 sec. Die verpresste Platte wurde anschließend visuell begutachtet, wobei sich keine Auffälligkeiten zeigten. Die anschließend durchgeführten Oberflächenprüfungen gemäß der DIN EN 15468 - August 2018 zeigten ebenfalls keine Auffälligkeiten. Es wurden alle Anforderungen der Beanspruchungsklasse 32 erfüllt.

### Ausführungsbeispiel 3:

In einer Produktionslinie werden 8 mm HDF vereinzelt, mit Hilfe von Bürsten von Staub befreit und denn über Rollentransporte weitertransportiert.

In einer Auftragsvorrichtung werden sie dann mit Melaminharz-Pulver in einer Menge von 25 g/m² mit Hilfe von Tribopistolen beschichtet. Im Melaminharz-Pulver waren die üblichen Hilfsstoffe wie Härter, Trennmittel usw. enthalten. Danach wird das Pulver durch Infrarotstrahlung angeschmolzen.

Danach wird die grundierte Platte im Mehrfachauftrag mit einer Farbgrundierung mit anschließender Zwischentrocknung(Umluft) beschichtet. Bei der Farbgrundierung handelt es sich um ein Gemisch aus Kasein und Pigment (Titandioxid). Die Auftragsmenge pro Auftrag liegt bei ca. 5 g fl./ m². Der Auftrag wird mindestens fünfmal wiederholt. Danach erfolgt der Auftrag eines Primers (Auftragsmenge: 10 - 20 g fl./m²) mit Umlufttrocknung.

Danach wird die Platte mit Hilfe von Walzen oder einem Digitaldrucker bedruckt. Die Auftragsmengen an Farbe liegen bei 3 bis 15 g fl. / m². Die Farbe wird über IR-Strahlung oder Umluft getrocknet.

Danach wird wiederum mit einer Tribopistole Melaminharz-Pulver aufgetragen (Auftragsmenge: 30 g/m²). Dieses Melaminharz-Pulver wird wieder mit Hilfe eines IR-Strahlers angeliert.

Auf diese Harzschicht wird mit einer Streuvorrichtung Korund aufgestreut (Auftragsmenge: 20 g Korund/m², F 180).

Danach wird wiederum mit einer Tribopistole Melaminharzpulver aufgetragen (Auftragsmenge: 50 g/m²). In dem Melaminharz-Pulver waren ca. 5 Gew% Cellulose (Fa. J. Rettenmaier & Söhne, Vivapur 302) enthalten. Dieses Melaminharz-Harzpulver wird wieder mit Hilfe eines IR-Strahlers angeliert. Im Melaminharz-Pulver waren die üblichen Hilfsstoffe wie Härter, Trennmittel usw. enthalten.

Dann wurden mit einer Streuvorrichtung Glaskugeln in einer Menge von ca. 8 g / m² (Fa. Potters, GP 065-90) aufgestreut.

Es erfolgt ein erneuter Auftrag von Melaminharz-Pulver mit Hilfe von Tribopistolen (Auftragsmenge: 40 g /m²). Auch hier sind im Melaminharz-Pulver die üblichen Hilfsstoffe enthalten. Das Harz wird wieder mit Hilfe eines IR-Strahlers angeliert.

Danach wird die Platte in einer KT-Presse zusammen mit einem Gegenzugimprägnat verpresst. Die Pressbedingungen waren: T=200°C, p= 40 kg/cm² und t= 25 sec. Die verpresste Platte wurde anschließend visuell begutachtet, wobei sich keine Auffälligkeiten zeigten. Die anschließend durchgeführten Oberflächenprüfungen gemäß der DIN EN 15468 - August 2018 zeigten ebenfalls keine Auffälligkeiten. Es wurden alle Anforderungen der Beanspruchungsklasse 32 erfüllt.

### Ausführungsbeispiel 4:

In einer Produktionslinie werden 8 mm HDF vereinzelt, mit Hilfe von Bürsten von Staub befreit und denn über Rollentransporte weitertransportiert.

In einer Auftragsvorrichtung werden sie dann mit Melaminharz-Pulver in einer Menge von 25 g/m² mit Hilfe von Tribopistolen beschichtet. Im Melaminharz-Pulver waren die üblichen Hilfsstoffe wie Härter, Trennmittel usw. enthalten. Zusätzlich enthielt das Harz 3 Gew% Kohlenstoff-Nanotubes. Danach wird das Pulver durch Infrarotstrahlung angeschmolzen.

Danach wird die grundierte Platte im Mehrfachauftrag mit einer Farbgrundierung mit anschließender Zwischentrocknung(Umluft) beschichtet. Bei der Farbgrundierung handelt es sich um ein Gemisch aus Kasein und Pigment (Titandioxid). Die Auftragsmenge pro Auftrag liegt bei ca. 5 g fl./ m². Der Auftrag wird mindestens fünfmal wiederholt. Danach erfolgt der Auftrag eines Primers (Auftragsmenge: 10 - 20 g fl./m²) mit Umlufttrocknung.

Danach wird die Platte mit Hilfe von Walzen oder einem Digitaldrucker bedruckt. Die Auftragsmengen an Farbe liegen bei 3 bis 15 g fl. / m². Die Farbe wird über IR-Strahlung oder Umluft getrocknet.

Danach wird wiederum mit einer Tribopistole Melaminharz-Pulver aufgetragen (Auftragsmenge: 30 g/m²). Dieses Melaminharz-Pulver wird wieder mit Hilfe eines IR-Strahlers angeliert.

Auf die Harzschicht wird mit einer Streuvorrichtung Korund aufgestreut (Auftragsmenge: 20 g Korund/m², F 180).

Danach wird wiederum mit einer Tribopistole Melaminharz-Pulver aufgetragen (Auftragsmenge: 50 g/m²). In dem Melaminharz-Pulver waren ca. 5 Gew% Cellulose (Fa. J. Rettenmaier & Söhne, Vivapur 302) enthalten. Dieses Melaminharz-Harzpulver wird wieder mit Hilfe eines IR-Strahlers angeliert. Im Melaminharz-Pulver waren die üblichen Hilfsstoffe wie Härter, Trennmittel usw. enthalten.

Dann wurden mit einer Streuvorrichtung Glaskugeln in einer Menge von ca. 8 g / m² (Fa. Potters, GP 065-90) aufgestreut.

Es erfolgt ein erneuter Auftrag von Melaminharz-Pulver mit Hilfe von Tribopistolen (Auftragsmenge: 40 g /m²). Auch hier sind im Melaminharz-Pulver die üblichen Hilfsstoffe enthalten. Das Harz wird wieder mit Hilfe eines IR-Strahlers angeliert.

Danach wird die Platte in einer KT-Presse zusammen mit einem Gegenzugimprägnat verpresst. Die Pressbedingungen waren: T=200°C, p= 40 kg/cm² und t= 25 sec. Die verpresste Platte wurde anschließend visuell begutachtet, wobei sich keine Auffälligkeiten zeigten. Die anschließend durchgeführten Oberflächenprüfungen gemäß der DIN EN 15468 - August 2018 zeigten ebenfalls keine Auffälligkeiten. Es wurden alle Anforderungen der Beanspruchungsklasse 32. Eine Messung des Oberflächenwiderstandes ergab einen Wert von 7,8 x10⁸ Ω.

## Patentansprüche

1. Verfahren zur Herstellung einer mit einem Dekor versehenen Holzwerkstoffplatte umfassend die Schritte:
a) Aufbringen von mindestens einer ersten Schicht aus mindestens einem pulverförmigen Harz auf mindestens eine Seite einer Holzwerkstoffplatte und Anschmelzen der mindestens einen aufgebrachten Schicht aus einem pulverförmigen Harz;
a1) Aufbringen von mindestens einer Grundierung auf die angeschmolzene Harzpulverschicht;
a2) Aufbringen von mindestens einer Primerschicht auf die mindestens eine Grundierung;
b) Aufbringen von mindestens einer Dekorschicht mittels eines Direktdruckverfahrens; und
c) Aufbringen von mindestens einer weiteren, zweiten Schicht aus mindestens einem pulverförmigen Harz auf die mindestens eine aufgedruckte Dekorschicht und Anschmelzen der mindestens einen auf die Dekorschicht aufgestreuten Schicht aus pulverförmigen Harz.

2. Verfahren nach Anspruch 1, **dadurch gekennzeichnet, dass** das pulverförmige Harz mittels elektrostatischer Aufladung auf die Holzwerkstoffplatte aufgetragen wird.

3. Verfahren nach einem der vorhergehenden Ansprüche, **dadurch gekennzeichnet, dass** das pulverförmige Harz ein Formaldehydharz, bevorzugt ein Harnstoffharz, ein Melaminharz oder ein Phenolharz, insbesondere bevorzugt ein Melamin-Formaldehyd-Harz ist.

4. Verfahren nach einem der vorhergehenden Ansprüche, **dadurch gekennzeichnet, dass** das pulverförmige Harz Pigmente, leitfähige Substanzen und/oder Zellulose enthält.

5. Verfahren nach einem der vorhergehenden Ansprüche, **dadurch gekennzeichnet, dass** die mindestens eine Grundierung Kasein, Maisstärke oder Sojaprotein umfasst.

6. Verfahren nach einem der vorhergehenden Ansprüche, **dadurch gekennzeichnet, dass** in einem Schritt d) gleichmäßig abriebfeste Partikel auf die Dekorschicht oder die in Schritt c) aufgebrachte Harzpulverschicht aufgestreut werden.

7. Verfahren nach einem der vorhergehenden Ansprüche, **dadurch gekennzeichnet, dass** in einem Schritt e) mindestens eine weitere, dritte Schicht aus mindestens einem pulverförmigen Harz insbesondere auf die Schicht aus abriebfesten Partikeln, aufgebracht wird.

8. Verfahren nach einem der vorhergehenden Ansprüche, **dadurch gekennzeichnet, dass** in einem Schritt f) Glaskugeln, insbesondere auf die mindestens eine weitere, dritte angeschmolzene Harzpulverschicht, aufgestreut werden.

9. Verfahren nach einem der vorhergehenden Ansprüche, **dadurch gekennzeichnet, dass** in einem Schritt g) mindestens eine weitere, vierte Schicht aus mindestens einem pulverförmigen Harz, insbesondere auf die Schicht aus Glaskugeln, aufgebracht wird.

10. Verfahren nach einem der vorhergehenden Ansprüche, **dadurch gekennzeichnet, dass** in einem Schritt h) der Schichtaufbau in einer Kurztaktpresse verpresst wird.

11. Verfahren nach Anspruch 1, umfassend die folgenden weiteren Schritte:
b1) Aufstreuen von abriebfesten Partikeln, wobei die mindestens eine weitere, zweite Schicht gemäß Schritt c) auf die mindestens eine Schicht aus abriebfesten Partikeln aufgebracht wird; und
h) Verpressen des Schichtaufbaus.

12. Verfahren nach Anspruch 1, umfassend die folgenden weiteren Schritte:
d) Aufstreuen von abriebfesten Partikeln;
e) Aufbringen von mindestens einer weiteren, dritten Schicht aus mindestens einem pulverförmigen Harz auf die mindestens eine Schicht aus abriebfesten Partikeln und Anschmelzen der aufgebrachten dritten Schicht aus pulverförmigen Harz;
f) Aufstreuen von Glaskugeln auf die mindestens eine dritte angeschmolzene Harzpulverschicht;
g) Aufbringen von mindestens einer weiteren, vierten Schicht aus mindestens einem pulverförmigen Harz auf die Schicht aus Glaskugeln und Anschmelzen der aufgebrachten vierten Schicht aus pulverförmigen Harz; und
h) Verpressen des Schichtaufbaus.

13. Produktionslinie zur Durchführung eines Verfahrens nach einem der vorhergehenden Ansprüche, umfassend
- mindestens eine Auftragsvorrichtung zum Auftragen einer ersten Harzpulverschicht auf die Oberseite der Holzwerkstoffplatte und mindestens eine Vorrichtung zum Anschmelzen der ersten Harzpulverschicht, insbesondere ein IR-Strahler;
- mindestens eine Auftragsvorrichtung zum Auftragen von mindestens einer Grundierungsschicht;
- mindestens eine Auftragsvorrichtung zum Auftragen von mindestens einer Primerschicht;
- mindestens eine Druckvorrichtung, und
- mindestens eine Auftragsvorrichtung zum Auftragen einer weiteren Harzpulverschicht und mindestens eine Vorrichtung zum Anschmelzen der Harzpulverschicht, insbesondere ein IR-Strahler.

## Claims

1. A method of manufacturing a wood-based panel provided with a decor comprising the steps:
(a) applying at least one first layer of at least one powdered resin to at least one side of a wood-based panel and fusing the at least one applied layer of powdered resin;
a1) applying at least one primer to the melted resin powder layer;
a2) applying of at least one primer layer to the at least one undercoat;
b) applying at least one decorative layer by means of a direct printing process; and
(c) applying at least one further, second layer of at least one powdered resin to the at least one imprinted decorative layer and melting the at least one layer of powdered resin spread on the decorative layer.

2. Method according to claim 1, **characterized in that** the powdered resin is applied to the wood-based panel by means of electrostatic charging.

3. Method according to any one of the preceding claims, **characterized in that** the powdered resin is a formaldehyde resin, preferably a urea resin, a melamine resin or a phenolic resin, more preferably a melamine-formaldehyde resin.

4. Method according to any one of the preceding claims, **characterized in that** the powdery resin contains pigments, conductive substances and/or cellulose.

5. Method according to any one of the preceding claims, **characterized in that** the at least one primer comprises casein, corn starch or soy protein.

6. Method according to any one of the preceding claims, **characterized in that** in a step d) abrasion-resistant particles are uniformly sprinkled onto the decorative layer or the resin powder layer applied in step c).

7. Method according to any one of the preceding claims, **characterized in that** in step e) at least one further, third layer of at least one powdered resin is applied, in particular to the layer of abrasion-resistant particles.

8. Method according to any one of the preceding claims, **characterized in that** in a step f) glass beads are sprinkled, in particular on the at least one further, third molten-on resin powder layer.

9. Method according to any one of the preceding claims, **characterized in that** in a step g) at least one further, fourth layer of at least one powdered resin is applied, in particular to the layer of glass beads.

10. Method according to one of the preceding claims, **characterized in that** in step h) the layer structure is pressed in a short-cycle press.

11. Method of claim 1 comprising the following further steps:
b1) scattering abrasion resistant particles, wherein the at least one further, second layer is applied to the at least one layer of abrasion resistant particles according to step c); and
h) pressing the layer structure.

12. Method of claim 1 comprising the following further steps:
d) Scattering of abrasion-resistant particles;
e) applying at least one further, third layer of at least one powdered resin to the at least one layer of abrasion-resistant particles and melting the applied third layer of powdered resin;
f) Sprinkling of glass beads on the at least a third melted resin powder layer;
(g) applying at least one further, fourth layer of at least one powdered resin to the layer of glass beads and fusing the applied fourth layer of powdered resin; and
h) pressing the layer structure.

13. A production line for carrying out a method according to any one of the preceding claims, comprising.
- at least one application device for applying a first resin powder layer to the upper surface of the wood-based panel, and at least one device for melting the first resin powder layer, in particular an IR emitter;
- at least one application device for applying at least one primer layer;
- at least one application device for applying at least one primer layer;
- at least one printing device, and
- at least one application device for applying a further resin powder layer and at least one device for melting the resin powder layer, in particular an IR radiator.

## Revendications

1. Procédé de fabrication d'une plaque en matériau dérivé du bois pourvue d'un décor comprenant les étapes :
a) l'application d'au moins une première couche en au moins une résine pulvérulente sur au moins un côté d'une plaque en matériau dérivé du bois et la fusion d'au moins une couche appliquée d'une résine pulvérulente ;
a1) l'application d'au moins un apprêt sur la couche de poudre dure fondue ;
a2) l'application d'au moins une couche primaire sur l'au moins un apprêt ;
b) l'application d'au moins une couche décorative au moyen d'un procédé d'impression directe ; et
c) l'application d'au moins une autre deuxième couche d'au moins une résine pulvérulente sur l'au moins une couche décorative imprimée et la fusion d'au moins une couche dispersée sur la couche décorative de résine pulvérulente.

2. Procédé selon la revendication 1, **caractérisé en ce que** la résine pulvérulente est appliquée au moyen de la charge électrostatique sur la plaque en matériau dérivé du bois.

3. Procédé selon l'une quelconque des revendications précédentes, **caractérisé en ce que** la résine pulvérulente est une résine de formaldéhyde, de préférence une résine d'urée, une résine de mélamine ou une résine de phénol, en particulier de préférence une résine de mélamine-formaldéhyde.

4. Procédé selon l'une quelconque des revendications précédentes, **caractérisé en ce que** la résine pulvérulente contient des pigments, des substances conductrices et/ou de la cellulose.

5. Procédé selon l'une quelconque des revendications précédentes, **caractérisé en ce que** l'au moins un apprêt comporte de la caséine, de l'amidon de maïs ou de la protéine de soja.

6. Procédé selon l'une quelconque des revendications précédentes, **caractérisé en ce que** dans une étape d) des particules résistantes à l'abrasion uniformément sont dispersées sur la couche décorative ou la couche de poudre dure appliquée à l'étape c).

7. Procédé selon l'une quelconque des revendications précédentes, **caractérisé en ce que** dans une étape e) au moins une autre troisième couche d'au moins une résine pulvérulente est appliquée en particulier sur la couche de particules résistantes à l'abrasion.

8. Procédé selon l'une quelconque des revendications précédentes, **caractérisé en ce que** dans une étape f) des billes de verre sont dispersées en particulier sur l'au moins une autre troisième couche de poudre dure fondue.

9. Procédé selon l'une quelconque des revendications précédentes, **caractérisé en ce que** dans une étape g), au moins une autre quatrième couche d'au moins une résine pulvérulente est appliquée en particulier sur la couche de billes de verre.

10. Procédé selon l'une quelconque des revendications précédentes, **caractérisé en ce que** dans une étape h) la structure en couches est compressée dans une presse à cycle court.

11. Procédé selon la revendication 1, comprenant les autres étapes suivantes :
b1) la dispersion de particules résistantes à l'abrasion, l'au moins une autre deuxième couche étant appliquée selon l'étape c) sur l'au moins une couche de particules résistantes à l'abrasion ; et
h) la compression de la structure en couches.

12. Procédé selon la revendication 1, comprenant les autres étapes suivantes :
d) la dispersion de particules résistantes à l'abrasion ;
e) l'application d'au moins une autre troisième couche d'au moins une résine pulvérulente sur l'au moins une couche de particules résistantes à l'abrasion et la fusion de la troisième couche appliquée de résine pulvérulente ;
f) la dispersion de billes de verre sur l'au moins une troisième couche de poudre dure fondue ;
g) l'application d'au moins une autre quatrième couche d'au moins une résine pulvérulente sur la couche de billes de verre et la fusion de la quatrième couche appliquée de résine pulvérulente ; et
h) la compression de la structure en couches.

13. Ligne de production pour la réalisation d'un procédé selon l'une quelconque des revendications précédentes, comprenant
- au moins un dispositif d'application pour l'application d'une première couche de poudre dure sur le côté dur de la plaque en matériau dérivé du bois et au moins un dispositif de fusion de la première couche de poudre dure, en particulier un émetteur d'infrarouges ;
- au moins un dispositif d'application pour l'application d'au moins une couche d'apprêt ;
- au moins un dispositif d'application pour l'application d'au moins une couche primaire ;
- au moins un dispositif d'impression, et
- au moins un dispositif d'application pour l'application d'une autre couche de poudre dure et au moins un dispositif de fusion de la couche de poudre dure, en particulier un émetteur d'infrarouges.
